# EUROPEAN PATENT APPLICATION

(11) **EP 4 618 256 A1**
(43) Date of publication of application: **17.09.2025**
(21) Application number: 24211118.5
(22) Date of filing: 06.11.2024
(51) Int. Cl.: H01M 50/00

(54) **HIGH-VOLTAGE BOX AND ENERGY STORAGE SYSTEM**

(30) Priority: 14.03.2024 CN 202420499394 U
(71) Applicant: Eve Energy Storage Co., Ltd., Wuhan, Hubei 430000 (CN)
(72) Inventor: DOU, Weimin, Wuhan Hubei, 430000 (CN); SUN, Hui, Wuhan Hubei, 430000 (CN); HE, Ming, Wuhan Hubei, 430000 (CN); HUANG, Mingxiang, Wuhan Hubei, 430000 (CN)
(74) Representative: Herrero & Asociados, S.L.

(57) **Abstract**

A high-voltage box (100) and an energy storage system (1000) are provided. The high-voltage box (100) includes a main body (1), a battery management system (3), and an electrical module (2). The battery management system (3) and the electrical module (2) are detachably installed in the main body (1). The battery management system (3) and the electrical module (2) are provided adjacent to each other and are connected. The electrical module (2) includes a substrate (21) and a plurality of electrical components (22). The substrate (21) is provided with a plurality of installation regions for installing the electrical components (22). The substrate (21) is further provided with an adapter (228) with a plurality of interfaces for connection with the electrical components (22) and an external battery system (4) respectively.

## Description

### TECHNICAL FIELD

The present disclosure relates to the technology field of energy storage, and in particular, to a high-voltage box and an energy storage system.

### BACKGROUND

The high-voltage box of an energy storage system is primarily configured to control the connection or disconnection of a main electrical circuit of a battery system, realize pre-charging, charging and discharging, etc. As needed, and monitor the state of the battery system in real time in terms of voltage, current, switches, contactors, etc.

The high-voltage box of related technologies is internally provided with a battery management system and a plurality of electrical components. The battery management system is coupled to the plurality of electrical components by means of wire harnesses or copper bars. However, due to the lack of effective zoning and the absence of modular design inside the high-voltage box, the layout of the electrical components in the high-voltage box is chaotic, and a large number of wire harnesses or devices need to be disassembled during later maintenance, making the operation cumbersome, and making maintenance inconvenient.

### SUMMARY

In a first aspect, some embodiments of the present disclosure provide a high-voltage box, which includes a main body, a battery management system, and an electrical module. The battery management system and the electrical module are detachably installed in the main body. The battery management system and the electrical module are provided adjacent to each other and are connected. The electrical module includes a substrate and a plurality of electrical components. The substrate is provided with a plurality of installation regions for installing the electrical components. The substrate is further provided with an adapter that is connected to the battery management system. The adapter is provided with a plurality of interfaces for connection with the electrical components and an external battery system.

In a second aspect, some embodiments of the present disclosure provide an energy storage system, which includes a battery system and the foregoing high-voltage box, where the battery system is connected to the high-voltage box.

The high-voltage box provided by the present disclosure integrates the electrical components onto the substrate to form the module that can be detachably installed inside the main body, and quick plug connections between the electrical components and the battery management system, as well as a quick plug connection between the external battery system and the battery management system are achieved by means of the interfaces of the adapter, so that the electrical module can be quickly installed and disassembled, which facilitates replacement of the whole electrical module. In addition, the substrate installs the electrical components in a plurality of regions, which can position and install each electrical component, making the arrangement of the electrical components regular and reasonable, which facilitates the wiring and disconnection among the electrical components, thereby facilitating replacement and maintenance of individual electrical component.

### BRIEF DESCRIPTION OF THE DRAWINGS

FIG. 1 is a partial schematic diagram of a high-voltage box according to some embodiments.
FIG. 2 is an exploded view of the assembly of an electrical module according to some embodiments.
FIG. 3 is a first three-dimensional schematic diagram of a substrate according to some embodiments.
FIG. 4 is a second three-dimensional schematic diagram of the substrate according to some embodiments.
FIG. 5 is a schematic diagram of an energy storage system according to some embodiments.

### Reference numerals in the drawings:

1000, energy storage system; 100, high-voltage box; 1, main body; 11, bottom plate; 2, electrical module; 21, substrate; 211, installation groove; 212, material reduction groove; 213, adhesive overflow groove; 22, electrical component; 221, shunt; 222, first fuse; 223, second fuse; 224, first high-voltage contactor; 225, second high-voltage contactor; 226, equalizing relay; 227, equalizing resistor; 228, adapter; 23, liquid-cooling plate; 24, heat conductive component; 241, heat conductive plate; 242, insulating thermal conductive adhesive; 25, heat-insulating member; 26, temperature sensor; 27, fixing member; 28, connecting member; 3, battery management system; 4, battery system.

### DETAILED DESCRIPTION

In the description of the present disclosure, unless specified or limited otherwise, the terms "connect with", "connected to", and "fixed" should be understood broadly, and may be, for example, fixed connections, detachable connections, or integral connections; may also be mechanical connections or electrical connections; may also be direct connections or indirect connections via intervening structures; may also be inner communications of two elements or interaction relationships between two elements. The specific meanings of the above terms in the present disclosure can be understood by those skilled in the art according to specific situations.

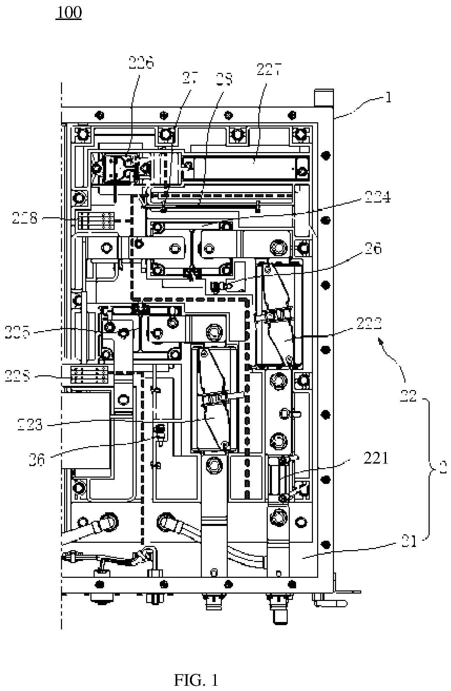

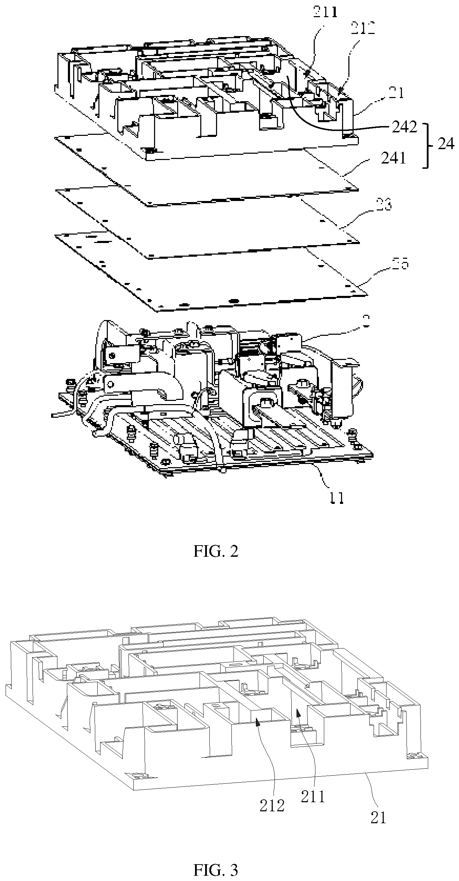

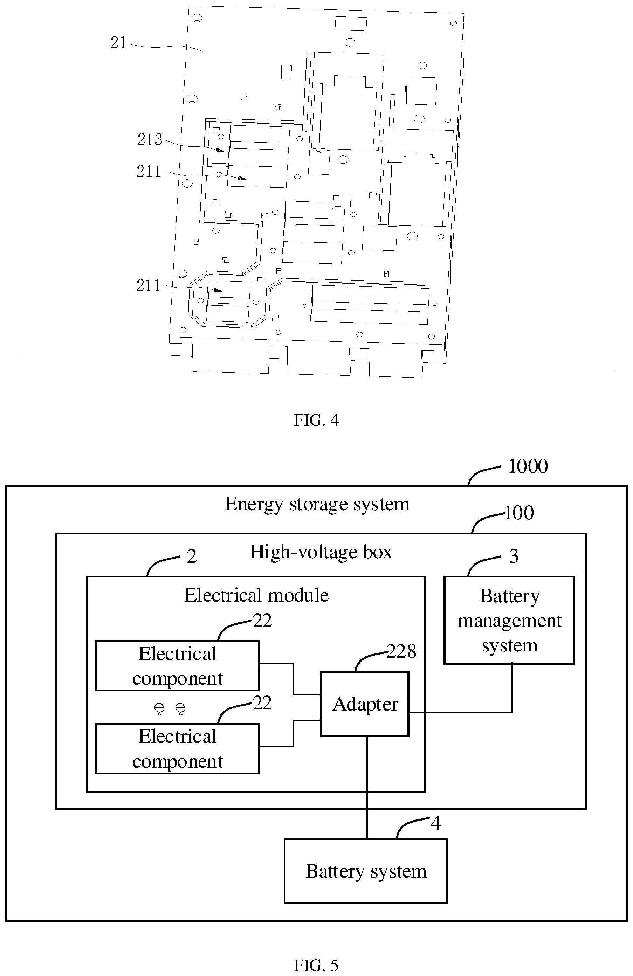

Referring to FIGS. 1 and 2, the present disclosure provides a high-voltage box 100, which includes a main body 1, a battery management system 3 (as shown in FIG. 5) and an electrical module 2. The battery management system 3 and the electrical module 2 are detachably installed in the main body 1. The battery management system 3 and the electrical module 2 are provided adjacent to each other and are connected. The electrical module 2 includes a substrate 21 and a plurality of electrical components 22. An upper surface of the substrate 21 is provided with a plurality of installation regions for installing the electrical components 22. In this embodiment, each of the installation regions is provided with the electrical components 22. In other embodiments, some installation regions are provided with the electrical components 22, while some installation regions serves as standby regions for installing other components, without installing electrical components 22. The substrate 21 is further provided with an adapter 228 that is connected to the battery management system 3 for signal connection. The adapter 228 can be a terminal block. The adapter 228 is provided with a plurality of interfaces which are respectively configured to connected with the electrical components 22 and an external battery system 4 (as shown in FIG. 5). In this design, the electrical module 2 is formed by integrating the electrical components 22 onto the substrate 21, and the electrical components 22 and the external battery system 4 are respectively in signal connection with the battery management system 3 through the adapter 228, so that the battery management system 3 can monitor the electrical components 22 and the external battery system 4 in real time, and control power-on and power-off of the electrical components 22 and the external battery system 4 for protection. In this design, the electrical module 2 is formed by integrating the electrical components 22 onto the substrate 21, and quick plug connections between the electrical components 22 and the battery management system 3, as well as a quick plug connection between the external battery system 4 and the battery management system 3 are achieved by means of the interfaces of the adapter 228, which facilitates assembly and disassembly of the electrical module 2, and facilitates replacement of the electrical module 2. In addition, the substrate 21 installs the electrical components 22 in a plurality of regions, which can position and install the electrical components 22, making the arrangement of the electrical components 22 regular and reasonable, which facilitates the wiring and disconnection among the electrical components 22, thereby facilitating replacement and maintenance of individual electrical component 22.

In some embodiments, referring to FIG. 1, the plurality of electrical components 22 include a shunt 221, a first fuse 222, a second fuse 223, a first high-voltage contactor 224, and a second high-voltage contactor 225. The electrical module 2 further includes a control circuit, which includes a positive circuit and a negative circuit. The negative circuit is coupled to a negative terminal on a side wall of the high-voltage box 100. The negative terminal is configured to be coupled to a negative electrode of the external battery system 4. The shunt 221, the first fuse 222 and the first high-voltage contactor 224 are sequentially coupled to form the negative circuit. The second fuse 223 and the second high-voltage contactor 225 are sequentially coupled to form the positive circuit. The positive circuit is coupled to a positive terminal on a side wall of the high-voltage box 100. The positive terminal is configured to be coupled to a positive electrode of the external battery system 4, so as to achieve an electrical connection between the electrical module 2 and the external battery system 4.

In an optional embodiment, the electrical component 22 further includes an equalizing relay 226 and an equalizing resistor 227. The equalizing relay 226 is coupled to the equalizing resistor 227 to form an equalizing circuit, which is coupled in parallel with the positive circuit. In some embodiments, the equalizing circuit is coupled in parallel with the second high-voltage contactor 225. During charging and discharging of the battery system 4, due to the differences between different individual batteries, imbalance is easily caused, which seriously affects the performance and service life of the battery system 4. By providing the equalizing circuit, during charging, the individual batteries having higher voltages can be discharged through the equalizing resistor 227, to gain more charging time for other individual batteries that have lower voltages, thereby equalizing the entire battery system 4.

Since a large amount of heat will be generated by the first fuse 222, the second fuse 223 and the equalizing resistor 227 during normal use, optionally, the substrate 21 is provided with temperature sensors 26 at a position adjacent to the first fuse 222, at a position adjacent to the second fuse 223, and at a position adjacent to the equalizing resistor 227. The temperature sensors 26 may be thermistors. The temperature sensors 26 are coupled to the battery management system 3. The temperature sensors 26 can monitor temperature changes in the surroundings of the first fuse 222, the second fuse 223 and the equalizing resistor 227, and transmit the temperature changes to the battery management system 3, so that the battery management system 3 can control the start and stop of the electrical module 2 according to the collected temperature changes.

Referring to FIG. 1, in order to describe the connection manner between the electrical component 22 and the adapter 228 more clearly, the wiring paths between the electrical components 22 and the adapter 228 are shown by bold dashed lines in FIG. 1. The temperature sensor 26, the first fuse 222, the second fuse 223, the first high-voltage contactor 224, the second high-voltage contactor 225, and the external battery system 4 may be plugged into the interfaces of the adapter 228 through signal wires, so that the battery management system 3 can receive feedback signals from and send control signals to the temperature sensor 26, the first fuse 222, the second fuse 223, the first high-voltage contactor 224, the second high-voltage contactor 225, and the external battery system 4 through the adapter 228.

Optionally, a periphery of the substrate 21 is provided with first connecting holes that are arranged at intervals, a bottom plate 11 of the main body 1 is welded with fixing nuts, and fasteners pass through the first connecting holes and are connected to the nuts, so as to lock the substrate 21 in the main body 1, thereby detachably installing the electrical module 2 in the main body 1.

In some embodiments, the substrate 21 is made of insulating and heat conductive material, which may be plastic, alumina ceramic, etc., so as to prevent short circuits among the electrical components 22. In some embodiments, the substrate 21 is integrally formed by plastic injection molding.

In an optional embodiment, referring to FIG. 2 to FIG. 4, each installation region is provided with an installation groove 211, and each installation groove 211 is provided with one of the electrical components 22. In this way, the installation groove 211 is capable of insulating and separating the electrical components 22, so as to avoid short circuits among the plurality of electrical components 22 or provide better insulation for the electrical components 22.

In other optional embodiments, the upper surface of the substrate 21 is provided with a plurality of positioning marks (such as engraved lines), which divide an installing surface of the substrate 21 into the plurality of installation regions. In this design, the installation regions can be formed on the substrate 21 by engraving lines without increasing the thickness of the substrate 21, so as to reduce the volume of the electrical module 2 and improve the space utilization rate of the main body 1.

In an optional embodiment, referring to FIG. 3, the substrate 21 is provided with a material reduction groove 212, which is spaced apart from the installation groove 211. By providing the material reduction groove 212, on the one hand, the material consumption of the substrate 21 can be reduced to lower costs, and on the other hand, the weight of the substrate 21 can also be reduced, which helps to reduce the overall weight of the high-voltage box 100.

In addition, when the substrate 21 is formed by plastic injection molding and is provided with the plurality of installation grooves 211, if the thickness of the groove wall of the installation grooves 211 is too large, during injection molding, the cooling rate of the outer surface of the groove wall of the installation groove 211 is faster, while the cooling rate of the central part of the groove wall of the installation groove 211 is slower. Therefore, as the cooling progresses, the plastic material in the central part of the groove wall of the installation groove 211 will expand to the outer surface while shrinking, causing insufficient filling in the center part and generating vacuum bubbles. However, this design facilitates reducing the thickness of the groove wall of the installation groove 211 by providing the material reduction groove 212, thereby reducing the occurrence of vacuum bubbles during the injection molding of the substrate 21, improving the quality of injection molding, and reducing manufacturing difficulty at the same time.

Optionally, as shown in FIG 1, the material reduction groove 212 is provided with a fixing member 27. The plurality of electrical components 22 are coupled via a connecting member 28. The connecting member 28 includes but is not limited to a copper bar, a wire harness, etc. The connecting member 28 is clamped to the fixing member 27. In some embodiments, the fixing member 27 may be a wire harness buckle, and the connecting member 28 may be a wire harness. The wire harness buckle can be used to clamp and limit the wire harness, so as to prevent the wire harness from moving during vibration, causing friction and even damage between the connecting member 28 and the outer walls of the electrical components 22.

In this embodiment, a high-voltage connection is implemented between the plurality of electrical components 22 by using a copper bar, and a low-voltage connection and a signal connection are implemented among the plurality of electrical components 22 by using a wire harness.

Due to a large amount of heat will be generated during the operation of the electrical components 22, as shown in FIG. 2, the substrate 21 is further provided with a liquid-cooling plate 23 and a heat conductive component 24. The liquid-cooling plate 23 is provided on a side surface of the substrate 21 away from the electrical components 22. In this embodiment, the liquid-cooling plate 23 is arranged on a lower surface of the substrate 21, and the heat conductive component 24 is respectively connected to the electrical components 22 and the liquid-cooling plate 23. The heat conductive component 24 can quickly transfer heat generated by the electrical components 22 to the liquid-cooling plate 23, and quickly dissipate heat through the liquid-cooling plate 23, so as to prevent the heat from accumulating in the main body 1, thereby helping to improve the service lives of the electrical components 22 and ensuring the stability and reliability of the high-voltage box 100.

In some embodiments, the heat conductive component 24 includes a heat conductive plate 241 and insulating thermal conductive adhesive 242. The heat conductive plate 241 may be a metal heat conductive plate. The heat conductive plate 241 is arranged between the liquid-cooling plate 23 and the substrate 21, and seals a mouth of the installation groove 211 adjacent to the liquid-cooling plate 23. The installation groove 211 penetrates the substrate 21, and the electrical component 22 is spaced apart from the groove wall of the installation groove 211. The insulating thermal conductive adhesive 242 is filled between the electrical component 22 and groove walls of the installation groove 211, and is connected to the heat conductive plate 241. The heat generated by the electrical component 22 can be first transferred to the heat-conductive plate 241 through the insulating thermal conductive adhesive 242, and then quickly transferred to the liquid-cooling plate 23 through the heat-conductive plate 241. The insulating thermal conductive adhesive 242 of this design can not only provide good insulation protection for the electrical component 22, but also can make the electrical component 22 stably fixed in the installation groove 211 and transfer the heat generated by the electrical component 22. However, due to a low thermal conductivity of the insulating thermal conductive adhesive 242, the thermal conductivity effect is poor. While the thermal conductivity coefficient of the heat conductive plate 241 is high, and the thermal conduction effect is good, which helps to improve the overall heat transfer efficiency, thereby improving the cooling effect inside the main body 1. In addition, the heat conductive plate 241 can also seal the mouth of the installation groove 211 adjacent to the liquid-cooling plate 23, so as to prevent overflow of the insulating thermal conductive adhesive 242 when pouring.

In an optional embodiment, referring to FIG. 4, a side surface of the substrate 21 facing the heat conductive plate 241 is recessed with an adhesive overflow groove 213 that is communication with the installation groove 211. The heat conductive plate 241 seals a mouth of the adhesive overflow groove 213 adjacent to the liquid-cooling plate 23. During pouring the insulating thermal conductive adhesive 242, a part of the insulating thermal conductive adhesive 242 can overflow into the adhesive overflow groove 213, so as to increase the contact area between the insulating thermal conductive adhesive 242 and the heat conductive plate 241, which helps to improve the heat transfer efficiency.

Still referring to FIG. 2, a side of the liquid-cooling plate 23 away from the substrate 21 is provided with a heat-insulating member 25. The heat-insulating member 25 is arranged between the bottom plate 11 of the main body 1 and the liquid-cooling plate 23. The heat-insulating member 25 is capable of isolating heat outside the main body 1 from being transferred to the liquid-cooling plate 23, thereby preventing the cooling effect of the liquid-cooling plate 23 from being reduced.

As shown in FIG. 5, the present disclosure also provides an energy storage system 1000, which includes a battery system 4 and the high-voltage box 100 of any one of the above embodiments. The battery system 4 is connected to the high-voltage box 100. The energy storage system 1000 of the present disclosure adopts a modular design, which makes assemble and disassemble simple, and makes maintenance convenient.

In the description of the present disclosure, it should be understood that the orientations or positional relationships indicated by the terms "up", "down", "left", "right", and the like are based on the orientations or positional relationships shown in the accompanying drawings. It is merely for the convenience of description and simplification of operation, rather than indicating or implying that the device or component referred to must have a specific orientation, be constructed and operated in a specific orientation, and therefore cannot be understood as a limitation of the present disclosure. In addition, the terms "first" and "second" are used to distinguish between descriptions and do not have a specific meaning.

In the description of this specification, the description with reference to the terms "embodiment", "example", etc. Is intended to mean that the specific features, structures, materials, or characteristics described in conjunction with the embodiment or example are included in at least one embodiment or example of the present disclosure. In this specification, the illustrative expressions of the above terms may not necessarily refer to the same embodiments or examples.

In addition, it should be understood that although this specification is described according to the embodiments, not each embodiment only contains an independent technical solution. This description in the specification is for clarity, and those skilled in the art should consider the specification as a whole. The technical solutions in each embodiment can also be appropriately combined to form other embodiments that can be understood by those skilled in the art.

## Claims

1. A high-voltage box (100) comprising a main body (1), a battery management system (3), and an electrical module (2); wherein the battery management system (3) and the electrical module (2) are detachably installed in the main body (1); the battery management system (3) and the electrical module (2) are provided adjacent to each other and are connected; the electrical module (2) comprises a substrate (21) and a plurality of electrical components (22); the substrate (21) is provided with a plurality of installation regions for installing the electrical components (22); the substrate (21) is further provided with an adapter (228) that is connected to the battery management system (3); wherein the adapter (228) is provided with a plurality of interfaces for signal connection with the electrical components (22) and an external battery system (4) signals respectively.

2. The high-voltage box (100) according to claim 1, wherein each installation region is provided with an installation groove (211), and each installation groove (211) is provided with one of the electrical components (22).

3. The high-voltage box (100) according to claim 2, wherein the substrate (21) is provided with a material reduction groove (212), which is spaced apart from the installation groove (211); wherein the material reduction groove (212) is provided with a fixing member (27); the plurality of electrical components (22) are coupled via a connecting member (28) that is clamped to the fixing member (27).

4. The high-voltage box (100) according to claim 2 or claim 3, wherein the substrate (21) is further provided with a liquid-cooling plate (23) and a heat conductive component (24); wherein the liquid-cooling plate (23) is provided on a side surface of the substrate (21) away from the electrical components (22), and the heat conductive component (24) is respectively connected to the electrical components (22) and the liquid-cooling plate (23).

5. The high-voltage box (100) according to claim 4, wherein the installation groove (211) penetrates the substrate (21); the heat conductive component (24) comprises a heat conductive plate (241) and insulating thermal conductive adhesive (242); wherein the heat conductive plate (241) is arranged between the liquid-cooling plate (23) and the substrate (21), and seals a mouth of the installation groove (211) adjacent to the liquid-cooling plate (23); the insulating thermal conductive adhesive (242) is filled between the electrical component (22) and groove walls of the installation groove (211) and connected to the heat conductive plate (241).

6. The high-voltage box (100) according to claim 5, wherein a side surface of the substrate (21) facing the heat conductive plate (241) is recessed with an adhesive overflow groove (213) that is in communication with the installation groove (211); the heat conductive plate (241) seals a mouth of the adhesive overflow groove (213) adjacent to the liquid-cooling plate (23).

7. The high-voltage box (100) according to claim 4, wherein a side of the liquid-cooling plate (23) away from the substrate (21) is provided with a heat-insulating member (25); wherein the heat-insulating member (25) is arranged between a bottom plate (11) of the main body (1) and the liquid-cooling plate (23).

8. The high-voltage box (100) according to any one of claims 1 to 3, wherein the plurality of electrical components (22) comprise a shunt (221), a first fuse (222), a second fuse (223), a first high-voltage contactor (224), and a second high-voltage contactor (225); wherein the shunt (221), the first fuse (222), and the first high-voltage contactor (224) are sequentially coupled to form a negative circuit; the second fuse (223) and the second high-voltage contactor (225) are sequentially coupled to form a positive circuit; wherein the negative circuit is configured to be coupled to a negative electrode of the external battery system (4), and the positive circuit is configured to be coupled to a positive electrode of the external battery system (4);
the electrical component (22) further comprises an equalizing relay (226) and an equalizing resistor (227); wherein the equalizing relay (226) is coupled to the equalizing resistor (227) to form an equalizing circuit, which is coupled in parallel with the positive circuit.

9. The high-voltage box (100) according to claim 8, wherein the substrate (21) is provided with temperature sensors (26) at positions adjacent to the first fuse (222) and the second fuse (223); wherein the temperature sensors (26) are coupled to the battery management system (3), and configured to monitor temperature changes in surroundings of the first fuse (222) and the second fuse (223), and transmit the temperature changes to the battery management system (3).

10. An energy storage system (1000) comprising a battery system (4) and the high-voltage box (100) according to any one of claims 1 to 9, wherein the battery system (4) is connected to the high-voltage box (100).
